# EUROPÄISCHE PATENTANMELDUNG

(11) **EP 4 187 233 A1**
(43) Veröffentlichungstag der Anmeldung: **31.05.2023**
(21) Anmeldenummer: 22206426.3
(22) Anmeldetag: 09.11.2022
(51) Int. Cl.: G01N 21/64, G01N 21/47

(54) **ORTS- UND ZEITAUFGELÖSTE BESTIMMUNG DER DERMALEN PENETRATION VON NICHT- ODER SCHWACHFLUORESZIERENDEN SUBSTANZEN**

(30) Priorität: 29.11.2021 DE 102021131244
(71) Anmelder: PHILIPPS-UNIVERSITÄT MARBURG, 35037 Marburg (DE)
(72) Erfinder: Keck, Cornelia, 35037 Marburg (DE); Raab, Christian, 35032 Marburg (DE); Wiemann, Sabrina, 35032 Marburg (DE); Koch, Martin, 35032 Marburg (DE); Castro Camus, Enrique, 35032 Marburg (DE); Brackmann, Stefan, 35032 Marburg (DE); Konde, Srumika, 35032 Marburg (DE)
(74) Vertreter: Durm Patentanwälte PartG mbB

(57) **Zusammenfassung**

Die vorliegende Erfindung betrifft eine Vorrichtung (14) zum Quantifizieren einer Penetration einer nicht- oder schwachfluoreszierenden Substanz (36) in eine Gewebeprobe (30), mit: einer Eingangsschnittstelle (22) zum Empfangen eines ersten Lichtmikroskopbildes eines ersten Gewebeschnitts (38) eines mit einer Formulierung der nicht- oder schwachfluoreszierenden Substanz behandelten Abschnitts (32) der Gewebeprobe und eines zweiten Lichtmikroskopbildes eines zweiten Gewebeschnitts (40) eines unbehandelten Abschnitts (34) der Gewebeprobe; einer Hintergrundeinheit (24) zum Ermitteln eines Hintergrundwerts basierend auf dem zweiten Lichtmikroskopbild; einer Subtraktionseinheit (26) zum Ermitteln eines Penetrationsbildes basierend auf dem ersten Lichtmikroskopbild und dem Hintergrundwert; und einer Auswerteeinheit (28) zum Ermitteln eines Penetrationswerts basierend auf dem Penetrationsbild. Die vorliegende Erfindung betrifft zudem ein Verfahren und ein System (10) zum Quantifizieren einer Penetration einer nicht- oder schwachfluoreszierenden Substanz (36) in eine Gewebeprobe (30).

## Beschreibung

Die vorliegende Erfindung betrifft eine Vorrichtung zum Quantifizieren einer Penetration einer nicht- oder schwachfluoreszierenden Substanz in eine Gewebeprobe. Die vorliegende Erfindung betrifft weiterhin ein Verfahren sowie ein System zum Ermitteln einer Penetration einer nicht- oder schwachfluoreszierenden Substanz in eine Gewebeprobe, und ein Computerprogrammprodukt.

Wirkstoffhaltige topische Zubereitungen (Cremes, Gelees, Pasten, Emulsionen etc.) haben die Aufgabe, Wirkstoffe bzw. Substanzen gezielt durch Barrieren des Körpers eines Lebewesens, insbesondere eines Menschen, zu transportieren. Beispielsweise werden Salben oder Cremes auf die Haut aufgetragen, Nasentropfen oder -sprays in der Nase appliziert, Tropfen und Salben an den Bindehäuten der Augen angewendet und Einläufe im Darm appliziert. Um Wirkung zu entfalten, ist es jeweils erforderlich, dass der Wirkstoff die entsprechende Barriere des Körpers überwinden kann.

Verfahren, die die Effektivität einer Formulierung hinsichtlich der Wirkstoffpenetration beurteilen, sind daher essentiell in der Formulierungsentwicklung. Nach aktuellem Stand der Technik wird das Testen einer Penetration einer Substanz in ein Gewebe zumeist in vivo an Menschen und Tieren durchgeführt. Hierfür werden beispielsweise Formulierungen auf die Haut aufgetragen und nach einer definierten Inkubationszeit Hautabrisse der oberen Hautschichten entnommen und mittels geeigneter Methoden analysiert (Hochleistungsflüssigkeits-chromatographie, HPLC, Massenspektroskopie etc.). Nachteil dieser Ansätze ist, dass nur die Penetration in obere Gewebeschichten ermittelt werden kann. Ein Durchdringen, beispielsweise eine transdermale Penetration, kann so nicht untersucht werden.

Zum Untersuchen einer transdermalen Penetration kann beispielsweise eine Raman-Spektroskopie verwendet werden oder auch eine Gewebeprobe einer tieferen Schicht analysiert werden. Bei der Entnahme einer Gewebeprobe, um diese hinsichtlich der Wirkstoffmenge zu untersuchen, wird diese zumeist zerstört. Die Bestimmung der Wirkstoffmenge erfolgt aus Gewebelysaten mittels geeigneter analytischer Ansätze. Aufgrund der typischerweise sehr geringen Wirkstoffmengen sind hier oft aufwändige und teure Analyseverfahren notwendig. Versuche am lebenden Organismus bedürfen üblicherweise zudem eines positiven Votums einer Ethikkommission. Derartige Ansätze sind daher für das Screening in frühen Entwicklungsstadien ungeeignet.

Auf der anderen Seite stehen ex vivo-Untersuchungsansätze, die an vorab entnommenen Gewebeproben (Mensch oder Tier) durchgeführt werden. Diese Ansätze sind zwar für Screenings sehr viel besser geeignet als die zuvor beschriebenen in vivo-Verfahren, haben jedoch den Nachteil, dass zumeist teure Analyseverfahren notwendig sind.

Zuletzt stellen in vitro-Methoden, beispielsweise Franz-Diffusionszellen oder Wirkstofffreisetzungstests gemäß gültigem Arzneibuch (z. B. Paddelapparatur, Rotating Disc, Durchflusszelle, etc.), einen weiteren Ansatz zur Untersuchung der Wirkstoffpenetration, insbesondere der dermalen und transdermalen Wirkstoffpenetration, dar. Diese Ansätze werden jedoch hinsichtlich ihrer Aussagekraft kritisiert, d.h. hinsichtlich einer unter Umständen fehlenden in vitro/in vivo Korrelation.

Ein Ansatz zum Untersuchen der dermalen Penetration von Curcumin wurde in Pelikh et al., "Dermal Penetration Analysis of Curcumin in an ex vivo Porcine Ear Model Using Epifluorescence Microscopy and Digital Image Processing", 2020, vorgestellt. Insbesondere wurde beschrieben, dass aufgrund der Fluoreszenz von Curcumin eine mikroskopische Untersuchung der transdermalen Penetration aussagekräftige Ergebnisse ermöglicht. In einer Bildanalyse wurde eine Ermittlung einer maximalen Penetrationstiefe sowie eine Ermittlung einer gesamten Penetrationsmenge durchgeführt.

Nachteile von bisherigen Ansätzen liegen damit zum einen in dem benötigten Aufwand zum Durchführen einer Analyse und zum anderen in einer Beschränkung auf eine Analyse spezieller und ausgewählter Substanzen, wenn die Analyse vereinfacht werden soll.

Ausgehend hiervon stellt sich dem Fachmann das Problem, einen möglichst effizient umsetzbaren Ansatz zum Quantifizieren einer Penetration einer nicht- oder schwachfluoreszierenden Substanz in eine Gewebeprobe bereitzustellen. Insbesondere soll ein Ansatz geschaffen werden, der ein einfaches und effizientes Screening unterschiedlicher Formulierungen einer Substanz ermöglicht. Die Kosten bei der Entwicklung wirkstoffhaltiger Zubereitungen, insbesondere topischer Zubereitungen aber auch andere Zubereitungen bspw. zur oralen, pulmonalen, okularen Applikation etc., sollen verringert werden.

Zum Lösen dieser Aufgabe betrifft die vorliegende Erfindung in einem ersten Aspekt eine Vorrichtung zum Quantifizieren einer Penetration einer nicht- oder schwachfluoreszierenden Substanz in eine Gewebeprobe, mit:
- einer Eingangsschnittstelle zum Empfangen eines ersten Lichtmikroskopbildes eines ersten Gewebeschnitts eines mit einer Formulierung der nicht- oder schwachfluoreszierenden Substanz behandelten Abschnitts der Gewebeprobe und eines zweiten Lichtmikroskopbildes eines zweiten Gewebeschnitts eines unbehandelten Abschnitts der Gewebeprobe;
- einer Hintergrundeinheit zum Ermitteln eines Hintergrundwerts basierend auf dem zweiten Lichtmikroskopbild;
- einer Subtraktionseinheit zum Ermitteln eines Penetrationsbildes basierend auf dem ersten Lichtmikroskopbild und dem Hintergrundwert; und
- einer Auswerteeinheit zum Ermitteln eines Penetrationswerts basierend auf dem Penetrationsbild.

In einem weiteren Aspekt betrifft die vorliegende Erfindung ein System zum Ermitteln einer Penetration einer nicht- oder schwachfluoreszierenden Substanz in eine Gewebeprobe, mit:
- einer Vorrichtung wie zuvor beschrieben; und
- einem Lichtmikroskop mit einer Kamera zum Erzeugen von Lichtmikroskopbildern.

Weitere Aspekte der Erfindung betreffen ein der Vorrichtung entsprechend ausgebildetes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren, das System und das Computerprogrammprodukt entsprechend der für die Vorrichtung in den abhängigen Ansprüchen beschriebenen Ausgestaltungen ausgeführt sein.

Erfindungsgemäß wird eine Penetration einer nicht- oder schwachfluoreszierenden Substanz in eine Gewebeprobe quantifiziert. Insbesondere wird ein Maß für eine Menge und/oder eine Eindringtiefe der Substanz in die Gewebeprobe ermittelt. Beispielsweise kann eine dermale Penetration in die Haut oder auch eine Penetration in eine Darmoberfläche quantifiziert werden.

Über die Eingangsschnittstelle werden zwei Lichtmikroskopbilder von Gewebeschnitten der Gewebeprobe empfangen. Beide Lichtmikroskopbilder zeigen dabei unterschiedliche Abschnitte derselben Gewebeprobe. Zum einen wird ein erster Abschnitt der Gewebeprobe, auf den die Formulierung aufgebracht wurde, untersucht. Zum anderen wird ein zweiter Abschnitt untersucht, auf den die Formulierung nicht aufgebracht wurde, der insoweit unbehandelt ist. Zunächst wird basierend auf dem zweiten Lichtmikroskopbild, also dem Bild des unbehandelten Abschnitts der Gewebeprobe, ein Hintergrundwert bestimmt. Dann wird basierend auf dem ersten Lichtmikroskopbild, also dem Bild des behandelten Abschnitts der Gewebeprobe, und dem Hintergrundwert ein Penetrationsbild ermittelt. Das Penetrationsbild wird dann ausgewertet, um eine Aussage zu der Penetration der Substanz in die Gewebeprobe zu ermöglichen. Bei dem erfindungsgemäßen Ansatz handelt es sich insoweit um einen ex vivo-Ansatz, bei dem eine Gewebeprobe nach ihrer Entnahme aus dem lebenden Organismus behandelt und untersucht wird. Die Gewebeprobe kann beispielsweise einige wenige Quadratzentimeter groß sein. Der Gewebeschnitt kann beispielsweise mittels eines Mikrotoms erzeugt werden.

Der erfindungsgemäße Ansatz basiert auf einem Vergleich zweier Lichtmikroskopbilder derselben Gewebeprobe, wobei eines davon einen unbehandelten Abschnitt und das andere einen behandelten Abschnitt zeigt. Durch den Vergleich kann der Einfluss der Substanz sichtbar gemacht und quantifiziert werden. Im Vergleich zu bisherigen mikroskopiebasierten Ansätzen ermöglicht der erfindungsgemäße Ansatz auch die Quantifizierung der Penetration von nicht- oder schwachfluoreszierenden Substanzen. Obwohl keine Fluoreszenz der Substanz ausgenutzt werden kann, wird eine Quantifizierung der Penetration ermöglicht. Insbesondere ist es möglich, eine ort- und zeitaufgelöste Überwachung der Penetration nicht- oder schwachfluoreszierender Substanzen zu erreichen. In kurzer Zeit kann ohne hohen analytischen Aufwand eine holistische Einschätzung über die Wirkung einer Formulierung, insbesondere einer topischen Formulierung, auf die Gewebeprobe gegeben werden. Die Entwicklung pharmazeutischer Produkte und kosmetischer Mittel wird vereinfacht und im Aufwand reduziert. Zudem eignet sich der erfindungsgemäße Ansatz auch für Screening-Versuche zur Einschätzung der Toxizität chemischer Substanzen nach Gewebeexposition, insbesondere nach dermaler Exposition. Der erfindungsgemäße Ansatz ist besonders vorteilhaft für die Anwendung zur Ermittlung der dermalen Penetration von Substanzen.

In einer bevorzugten Ausgestaltung ist die Eingangsschnittstelle zum Empfangen von unter breitbandiger Beleuchtung aufgenommenen Lichtmikroskopbildern ausgebildet. Die Beleuchtung erfolgt vorzugsweise über einen Wellenlängenbereich mit einem Umfang größer 200 nm, sehr bevorzugt größer 300 nm, insbesondere größer 400 nm. Es wird eine breitbandige Beleuchtung, also eine Beleuchtung mit einem umfangreichen spektralen Anteil, vorgenommen. Die Beleuchtung erfolgt in anderen Worten über einen Großteil (insbesondere über 50 %) des für den Menschen sichtbaren Spektrums. Die Beleuchtung erfolgt dabei nicht zwangsweise mit gleichmäßigen Intensitäten über den gesamten Wellenlängenbereich. Beispielsweise kann eine Beleuchtung mit einer Halogen- bzw. Halogenmetalllichtquelle erfolgen. Entweder wird ein breitbandiger Wellenlängenfilter (Farbfilter) oder kein Wellenlängenfilter angewendet, um die breitbandige Beleuchtung zu erreichen. Durch die Verwendung einer breitbandigen Beleuchtung wird der Einfluss der nicht- oder schwachfluoreszierenden Substanz in der Gewebeprobe verbessert sichtbar gemacht. Es ergibt sich eine genauere Ermittlung des Penetrationswerts.

In einer bevorzugten Ausgestaltung ist die Eingangsschnittstelle zum Empfangen von unter Anwendung eines Polarisationsfilters aufgenommenen Lichtmikroskopbildern ausgebildet. Ein Polarisationsfilter erlaubt eine verbesserte Unterdrückung der Einflüsse der obersten Schicht der Gewebeprobe, insbesondere der obersten Hautschicht im Falle einer Untersuchung der dermalen Penetration. Dabei wird insbesondere sowohl eingangs- als auch ausgangsseitig jeweils ein Polarisationsfilter verwendet, um eine möglichst hohe Aussagekraft hinsichtlich der Penetration der Substanz in die Gewebeprobe zu erreichen.

In einer bevorzugten Ausgestaltung ist die Hintergrundeinheit zum Ermitteln eines Intensitätsschwellenwerts für Intensitätswerte von Pixeln des zweiten Lichtmikroskopbildes als Hintergrundwert ausgebildet. Die Hintergrundeinheit ist vorzugsweise zum Ermitteln eines Intensitätsschwellenwerts ausgebildet, durch dessen Anwendung auf die Pixel des zweiten Lichtmikroskopbildes ein Bereich einer Oberfläche der Gewebeprobe eine minimale Sichtbarkeit aufweist. Der Intensitätsschwellenwert wird ausgehend von der Intensität der Pixel des zweiten Lichtmikroskopbildes, also insbesondere der Deutlichkeit der Repräsentation einzelner Bildbereiche festgelegt. Die Pixelwerte (Intensitätswerte) werden beispielsweise anhand einer 8-Bit-Skala (Werte bzw. Grauwerte von 0 bis 255) verwendet und es wird ein Schwellenwert bezüglich dieser Skala bestimmt. Anhand dieses Schwellenwerts wird eine Diskriminierung vorgenommen. Eine Oberfläche der Gewebeprobe wird also mittels Schwellenwertanwendung weitestgehend ausgeblendet. Die Weiterverarbeitung bzw. die Ermittlung des Penetrationswerts erfolgt nach der Anwendung des Intensitätsschwellenwerts auf das erste Lichtmikroskopbild. Der Intensitätsschwellenwert kann dabei vordefiniert (beispielsweise basierend auf einer Kalibrierung) sein oder mittels einer Bildanalyse ermittelt werden. Die Anwendung eines Intensitätsschwellenwerts ist dabei effizient berechenbar und stellt nur geringe Anforderungen an die benötigte Rechenleistung. Insoweit ergibt sich ein einfach ausführbarer Ansatz zur Vorverarbeitung des zweiten Lichtmikroskopbildes.

In einer bevorzugten Ausgestaltung ist die Subtraktionseinheit zum Ermitteln des Penetrationsbildes basierend auf einer Anwendung des Intensitätsschwellenwerts auf Intensitätswerte von Pixeln des ersten Lichtmikroskopbildes ausgebildet. Die Intensitätswerte bzw. Pixelwerte werden also anhand des Intensitätsschwellenwerts sozusagen abgeschnitten oder ausgeblendet. Beispielsweise werden nur Pixel mit Intensitätswerten über dem Intensitätsschwellenwert weiter berücksichtigt. Die Weiterverarbeitung und die Ermittlung des Penetrationswerts erfolgt nach der Anwendung des Intensitätsschwellenwerts. Es ergibt sich eine effiziente Berechenbarkeit.

In einer bevorzugten Ausgestaltung ist die Auswerteeinheit zum Ermitteln des Penetrationswerts basierend auf Intensitätswerten von Pixeln des Penetrationsbildes ausgebildet. Vorzugsweise wird der Penetrationswert basierend auf einer Mittelwertbildung der Intensitätswerte aller Pixel des Penetrationsbildes ermittelt. Eine Ermittlung des Penetrationswerts ausgehend von Pixelwerten kann in automatisierter und effizient berechenbarer Weise erfolgen. Die Anforderungen an die Rechenleistung sind vergleichsweise niedrig, sodass eine hohe Anzahl an Bildern ausgewertet werden kann, um eine statistische Analyse zu ermöglichen.

In einer bevorzugten Ausgestaltung ist die Auswerteeinheit zum Ermitteln des Penetrationswerts basierend auf einer Erkennung einer Gewebeoberfläche in dem ersten Lichtmikroskopbild und einer Ermittlung einer Distanz zwischen der Gewebeoberfläche und einem in dem Penetrationsbild identifizierten Bildbereich einer maximalen Eindringtiefe der Substanz in die Gewebeprobe ausgebildet. Für die Erkennung der Gewebeoberfläche können Ansätze der Bildanalyse und Bildverarbeitung eingesetzt werden (Mustererkennung etc.). Die Ermittlung der Distanz zwischen der Gewebeoberfläche und einem Bereich, in dem die eingedrungene Substanz erkennbar ist, erfolgt insbesondere basierend auf dem Penetrationsbild. In dem Penetrationsbild wird also festgestellt, an welcher Stelle der Gewebeprobe die Substanz eingedrungen ist. Dies wird dann mit dem erkannten Bereich der Gewebeoberfläche verglichen. Insbesondere kann so festgestellt werden, wie tief eine Substanz in die Gewebeprobe eingedrungen ist. Es ergibt sich eine weitere Metrik bzw. Quantifizierungsmöglichkeit hinsichtlich des Eindringens der Substanz in die Gewebeprobe. Eine einfach berechenbare und aussagekräftige Quantifizierung wird erreicht.

In einer bevorzugten Ausgestaltung ist die Eingangsschnittstelle zum Empfangen von farbigen Lichtmikroskopbildern ausgebildet. Die Subtraktionseinheit ist zum Ermitteln des Penetrationsbildes basierend auf einer Unterdrückung mindestens eines Farbkanals in dem zweiten Lichtmikroskopbild ausgebildet. Wenn farbige Lichtmikroskopbilder empfangen werden, also Bilder, die von einer Farbkamera erzeugt wurden, so kann eine effiziente Bearbeitung durch eine Unterdrückung eines Farbkanals ermöglicht werden. Die Berechnung wird vereinfacht. Zudem bieten unterschiedliche Farbkanäle einen unterschiedlichen Informationsgehalt hinsichtlich der eingedrungenen Substanz. Es ergibt sich eine höhere Aussagekraft hinsichtlich der penetrierten Substanz.

In einer bevorzugten Ausgestaltung ist die Eingangsschnittstelle zum Empfangen von Lichtmikroskopbildern von senkrecht zu einer Oberfläche der Gewebeprobe verlaufenden vertikalen Gewebeschnitten ausgebildet. Insbesondere ist es vorteilhaft, wenn vertikale Gewebeschnitte, also Gewebeschnitte, die senkrecht zu der analysierten Gewebeprobe, beispielsweise senkrecht zur Hautoberfläche, erzeugt wurden, untersucht werden. Bei vertikalen Gewebeschnitten kann eine Eindringtiefe ermittelt werden. Zudem ergibt sich eine Möglichkeit, eine Aussage hinsichtlich der Tiefe des Eindringens zu treffen. Die Penetration kann in einfach berechenbarer Weise quantifiziert werden.

In einer bevorzugten Ausgestaltung ist die Eingangsschnittstelle zum Empfangen von auf einem Objektträger des Lichtmikroskops befindlichen Gewebeabschnitten mit einer Dicke zwischen 15 µm und 50 µm, insbesondere einer Dicke zwischen 20 µm und 40 µm, ausgebildet. Durch die Verwendung von vergleichsweise dicken Gewebeschnitten kann einer Beeinflussung durch lokale Schwankungen entgegengewirkt werden. Es ergibt sich eine statistisch aussagekräftigere Quantifizierung des Eindringens der Substanz in die Gewebeprobe. Zudem können die vergleichsweise dicken Gewebeschnitte effizienter erzeugt werden. In anderen Worten sind die Anforderungen an die Erzeugung geringer. Es ergibt sich eine verbesserte Anwendung für das Screening.

In einer bevorzugten Ausgestaltung ist die Eingangsschnittstelle zum Empfangen der Lichtmikroskopbilder von einer Kamera eines Lichtmikroskops ausgebildet, insbesondere einer Graustufenkamera. Die Verwendung einer Graustufenkamera ermöglicht eine hohe Aussagekraft hinsichtlich der Penetration der nicht- oder schwachfluoreszierenden Substanz in die Gewebeprobe. Zudem kann die Auswertung hinsichtlich der Berechenbarkeit vereinfacht werden.

Zuletzt werden die Anforderungen an das Lichtmikroskop bzw. die Kamera des Lichtmikroskops verringert.

In einer bevorzugten Ausgestaltung ist die Eingangsschnittstelle zum Empfangen der Lichtmikroskopbilder von einem Auflichtmikroskop ausgebildet. Zusätzlich oder alternativ ist die Eingangsschnittstelle zum Empfangen der Lichtmikroskopbilder von einem Fluoreszenzmikroskop, insbesondere einem Epifluoreszenzmikroskop ausgebildet. Durch die Verwendung eines Auflichtmikroskops ergibt sich eine verbesserte Aussagekraft hinsichtlich der Penetration der Substanz in die Gewebeprobe. Eine Erkennung der Substanz in der Gewebeprobe wird erleichtert. Fluoreszenzmikroskope und insbesondere Epifluoreszenzmikroskope sind weit verbreitet, sodass der erfindungsgemäße Ansatz nur geringe Anforderungen an die verwendeten Mikroskope stellt. Es ergibt sich eine einfache Anwendbarkeit.

Unter einem Lichtmikroskopbild versteht sich hierin insbesondere ein von einer Kamera eines Lichtmikroskops erzeugtes Foto des entsprechenden Gewebeschnitts der Gewebeprobe. Das Lichtmikroskopbild bzw. die Lichtmikroskopbilder können insbesondere von einer (Digital-)Kamera eines Lichtmikroskops erzeugt bzw. empfangen werden. Es ist aber auch möglich, dass zuvor erzeugte und gespeicherte Bilder verwendet werden, die über eine Datenschnittstelle empfangen werden, bspw. von einer Datenbank. Unter einem Quantifizieren der Penetration versteht sich insbesondere eine Angabe eines Werts (ein- oder mehrdimensionaler Wert), der Informationen zu einer penetrierten Menge oder auch einer Eindringtiefe der Substanz in die Gewebeprobe enthält. Eine nicht- oder schwachfluoreszierende Substanz ist insbesondere eine Substanz, die nicht oder nur in geringem Umfang fluoresziert. Die Substanz emittiert auch unter Anregung durch Licht nur sehr wenige oder keine Photonen. Insbesondere ist es mit dem erfindungsgemäßen Ansatz möglich, die Penetration von Substanzen in die Gewebeprobe zu quantifizieren, die nicht fluoreszieren. Ein Gewebeschnitt ist eine Materialprobe, die durch Schneiden erzeugt wird. Insbesondere kann ein ausgestanzter Probenbereich geschnitten werden. Der behandelte Abschnitt ist derjenige Abschnitt, auf den die Substanz aufgetragen oder angewendet wurde. Die hierin angegebenen Werte (Hintergrundwert, Penetrationswert etc.) können sowohl ein- als auch mehrdimensional sein und auf unterschiedlichen Skalen angegeben werden. Ein Lichtmikroskop ist ein Mikroskop, bei dem ein Bild unter Beleuchtung einer Probe erzeugt wird.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Darstellung eines erfindungsgemäßen Systems zum Ermitteln einer Penetration einer nicht- oder schwachfluoreszierenden Substanz in eine Gewebeprobe;
- Figur 2: eine schematische Darstellung einer erfindungsgemäßen Vorrichtung;
- Figur 3: eine schematische Darstellung des Erstellens einer Gewebeprobe bzw. eines ersten Gewebeschnitts und eines zweiten Gewebeschnitts;
- Figur 4: eine Darstellung von ermittelten Penetrationsbildern;
- Figur 5: eine beispielhafte Auswertung zur orts- und zeitaufgelösten Observation der dermalen Penetration von Koffein;
- Figur 6: eine weitere beispielhafte Auswertung zur orts- und zeitaufgelösten Observation der dermalen Penetration von Koffein;
- Figur 7: eine Auswahl an erzeugten Penetrationsbildern von unterschiedlichen Gewebeschnitten;
- Figur 8: eine beispielhafte Auswertung zur Observation der dermalen Penetration zwischen verschiedenen Formulierungen von Rutin;
- Figur 9: eine weitere beispielhafte Auswertung zur Observation der dermalen Penetration zwischen verschiedenen Formulierungen von Rutin;
- Figur 10: eine beispielhafte Auswertung zur Observation der dermalen Penetration von verschiedenen Formulierungen von Vaseline; und
- Figur 11: eine schematische Darstellung eines erfindungsgemäßen Verfahrens.

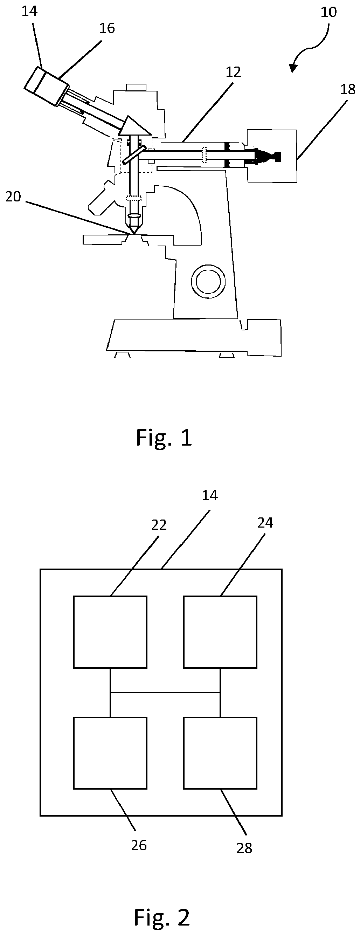

In Figur 1 ist schematisch ein System 10 zum Ermitteln einer Penetration einer nicht- oder schwachfluoreszierenden Substanz in eine Gewebeprobe dargestellt. Das System 10 umfasst ein Lichtmikroskop 12 sowie eine Vorrichtung 14 zum Quantifizieren einer Penetration der nicht- oder schwachfluoreszierenden Substanz.

Im dargestellten Ausführungsbeispiel ist das Lichtmikroskop 12 als Epifluoreszenzmikroskop ausgebildet. Das Lichtmikroskop 12 umfasst eine Lichtquelle 18, mittels derer ein Objektträger 20 beleuchtet wird. Im dargestellten Ausführungsbeispiel ist das Lichtmikroskop 12 als Auflichtmikroskop ausgebildet. Es versteht sich, dass das Lichtmikroskop 12 unterschiedliche Filter, insbesondere Polarisations- und/oder Farbfilter umfassen kann. Die Vorrichtung 14 ist im dargestellten Ausführungsbeispiel direkt an einer Kamera 16 des Lichtmikroskops 12 angeordnet, wobei mit der Kamera 16 Lichtmikroskopbilder erzeugt werden. Es versteht sich, dass die Vorrichtung 14 in alternativen Ausführungsformen auch in anderer Form ausgebildet sein kann, beispielsweise als Desktop-Computer bzw. als Software für einen solchen Desktop-Computer, der dazu ausgebildet ist, die erfindungsgemäße Quantifizierung der Penetration basierend auf von der Kamera 16 erzeugten Lichtmikroskopbildern vorzunehmen. Die Anbindung an die Kamera 16 kann dabei beispielsweise kabelgebunden oder kabellos sein. Ebenfalls ist es möglich, dass eine manuelle Übertragung der Lichtmikroskopbilder nach deren Erzeugung stattfindet, die auch zeitlich versetzt sein kann, beispielsweise durch eine manuelle Datenübertragung per USB-Stick.

Erfindungsgemäß ist es vorgesehen, nicht- oder schwachfluoreszierende Substanzen hinsichtlich ihres Penetrationsverhaltens in Gewebe, insbesondere in menschliche Haut oder auch in die Darmoberfläche, orts- und zeitaufgelöst zu untersuchen. In Bezug auf die Untersuchung frischer Haut kann zudem neben dem orts- und zeitaufgelösten Penetrationsverhalten auch die Wirkung der Formulierung auf die Hauthydration untersucht werden. Der Einsatz des erfindungsgemäßen Ansatzes ermöglicht es dabei, in kurzer Zeit und ohne hohen analytischen Aufwand eine holistische Einschätzung über die Wirkung einer Formulierung auf eine Gewebeprobe zu geben. Der Ansatz eignet sich dadurch universell für die Entwicklung pharmazeutischer Produkte sowie auch für die Entwicklung kosmetischer Mittel. Ebenfalls eignet sich der Ansatz für Screening-Versuche zur Einschätzung der Toxizität chemischer Substanzen nach dermaler Exposition.

In dem erfindungsgemäßen Ansatz ist es vorgesehen, eine Formulierung einer nicht- oder schwachfluoreszierenden Substanz auf eine Gewebeprobe aufzutragen. Anschließend erfolgt ein Ausstanzen und Einfrieren, bevor dann Gewebeschnitte angefertigt werden. Die Gewebeschnitte werden direkt auf Objektträger aufgebracht. Von den Schnitten werden mittels des Lichtmikroskops 12 Lichtmikroskopbilder aufgenommen. Dabei wird mindestens ein erstes Lichtmikroskopbild eines ersten Gewebeschnitts eines mit der Formulierung der Substanz behandelten Abschnitts der Gewebeprobe erzeugt und ein zweites Lichtmikroskopbild eines zweiten Gewebeschnitts eines unbehandelten Abschnitts der Gewebeprobe. Basierend auf einer Bildauswertung kann dann ein Penetrationswert bestimmt werden, der die Penetration örtlich und/oder zeitlich quantifiziert.

In Figur 2 ist schematisch eine erfindungsgemäße Vorrichtung 14 dargestellt. Die Vorrichtung umfasst eine Eingangsschnittstelle 22, eine Hintergrundeinheit 24, eine Subtraktionseinheit 26 sowie eine Auswerteeinheit 28. Die verschiedenen Einheiten und Schnittstellen können dabei einzeln oder getrennt in Soft- und/oder in Hardware ausgebildet sein. Insbesondere kann es sich um Softwaremodule einer auf einem oder mehreren Prozessoren ausgeführten Software handeln.

Über die Eingangsschnittstelle 22 werden die mindestens zwei Lichtmikroskopbilder empfangen. Insbesondere können dabei auch Graustufenbilder bzw. Bilder einer Graustufenkamera empfangen werden. Für den Empfang kann die Eingangsschnittstelle 22 direkt an eine Kamera eines Lichtmikroskops angebunden sein. Es ist aber auch möglich, dass die Eingangsschnittstelle 22 mit einer entsprechenden Datenbank in Verbindung steht, von der dann die Lichtmikroskopbilder empfangen werden. Insbesondere können Lichtmikroskopbilder empfangen werden, die unter Beleuchtung über einen breitbandigen Wellenlängenbereich aufgenommen wurden. Beispielsweise kann eine vorteilhafte Verarbeitung und eine genaue Auswertung basierend auf Lichtmikroskopbildern erfolgen, die unter Beleuchtung über einen Wellenlängenbereich mit einem Umfang von mehr als 200 nm, vorzugsweise mehr als 300 nm bzw. mehr als 400 nm, aufgenommen wurden.

Die Hintergrundeinheit 24 ermittelt einen Hintergrundwert basierend auf dem zweiten Lichtmikroskopbild, also auf dem Lichtmikroskopbild des unbehandelten Abschnitts der Gewebeprobe. Der Hintergrundwert erlaubt insbesondere eine Definition des Hintergrunds in dem Bild der Gewebeprobe. Es erfolgt in anderen Worten eine Teilung des Bildes in Vordergrund- und Hintergrundpixel. Hierbei entsprechen Hintergrundpixel insbesondere der Lichtstreuung der durch die obere Schicht der untersuchten Gewebeprobe ausgelösten Lichtstreuung bzw. der Autofluoreszenz der oberen Schicht. Die Vordergrundpixel entsprechen der penetrierten Substanz. Der ermittelte Hintergrundwert repräsentiert insoweit diese Hintergrundpixel bzw. einen Hintergrund. Die Ermittlung des Hintergrundwerts erfolgt dabei basierend auf Gewebeschnitten des unbehandelten Abschnitts der Gewebeprobe.

Insbesondere ist es möglich, dass in der Hintergrundeinheit 24 ein Intensitätsschwellenwert für Intensitätswerte von Pixeln ermittelt wird. Insbesondere wird also ein Schwellenwert ermittelt, der eine Art Abschneiden von denjenigen Pixeln, die die Oberfläche (bzw. den Hintergrund) der untersuchten Gewebeprobe repräsentieren, ermöglicht. Für die Ermittlung des Hintergrundwerts kann auf Verfahren der Bildanalyse zurückgegriffen werden. Insbesondere ist es möglich, dass eine Kantenerkennung oder ein anderer Ansatz durchgeführt werden.

In der Subtraktionseinheit 26 wird basierend auf dem ersten Lichtmikroskopbild, also dem Bild des Gewebeschnitts des mit der Formulierung der Substanz behandelten Abschnitts der Gewebeprobe sowie dem Hintergrundwert ein Penetrationsbild ermittelt. Insbesondere ist es dabei möglich, dass für die Bildanalyse sozusagen der Hintergrund subtrahiert wird, um damit den Vordergrund (also die penetrierte Substanz) sichtbar zu machen. Es wird also ein abzuziehender Hintergrund, der mit Schnitten des unbehandelten Abschnitts festgelegt wurde, von dem Bild eines Schnitts des behandelten Abschnitts abgezogen.

Die Subtraktionseinheit 26 kann dabei insbesondere dazu ausgebildet sein, einen zuvor ermittelten Intensitätsschwellenwert auf Intensitätswerte von Pixeln des ersten Lichtmikroskopbildes anzuwenden. Durch diese Anwendung des Intensitätsschwellenwerts erfolgt die zuvor beschriebene Subtraktion des Hintergrunds vom Vordergrund. Ziel der Ermittlung des Penetrationsbildes ist es insoweit also, ein Bild zu erzeugen, in dem lediglich die nicht- oder schwachfluoreszierende Substanz, nicht jedoch die Oberfläche der Gewebeprobe zu sehen bzw. repräsentiert ist.

In der Auswerteeinheit 28 erfolgt dann eine Ermittlung eines Penetrationswerts basierend auf dem Penetrationsbild. Das Penetrationsbild wird dabei durch Ansätze der Bilderkennung und Bildverarbeitung ausgewertet. Insbesondere ist es möglich, dass die nach Abzug der Hintergrundpixel übrig gebliebenen Vordergrundpixel durch Auslesen und Mitteln derer Intensitätswerte (Grauwerte) ausgewertet werden. Es ist beispielsweise möglich, einen Anteil von Pixeln mit Werten oberhalb des Intensitätsschwellenwerts an der gesamten Bildfläche anzugeben, der dann ein Maß für die Menge der penetrierten Substanz darstellt. Ebenfalls ist es möglich, dass Mittelwerte der Messwerte gebildet werden, wodurch sich die mittlere Menge an penetriertem Wirkstoff abschätzen lässt (semiquantitative Analytik). Die mittleren Grauwerte pro Pixel bzw. die Angabe der anteiligen Fläche nach Abzug der Hintergrundpixel in dem Bild entspricht einem Maß für die Menge der penetrierten Substanz. Insoweit können die Intensitätswerte von Pixeln des Penetrationsbildes ausgewertet werden. Die Mittelwertbildung ermöglicht eine Aussage zur Menge der penetrierten Substanz. Die Ermittlung der anteiligen Fläche, die von Pixeln bedeckt ist, nachdem die Hintergrundpixel abgezogen wurden, ermöglicht ebenfalls eine Angabe zu einer Menge der penetrierten Substanz. Des Weiteren ist es auch möglich, dass mittels Methoden der Bildverarbeitung festgestellt wird, wie tief die Substanz in die Gewebeprobe penetriert ist. Hierzu kann beispielsweise eine Detektion einer maximalen Penetration in Eindringrichtung senkrecht zur Gewebeoberfläche erfolgen. Ebenfalls ist es möglich, dass andere Ansätze der automatisierten Bildverarbeitung in der Auswerteeinheit 28 angewendet werden.

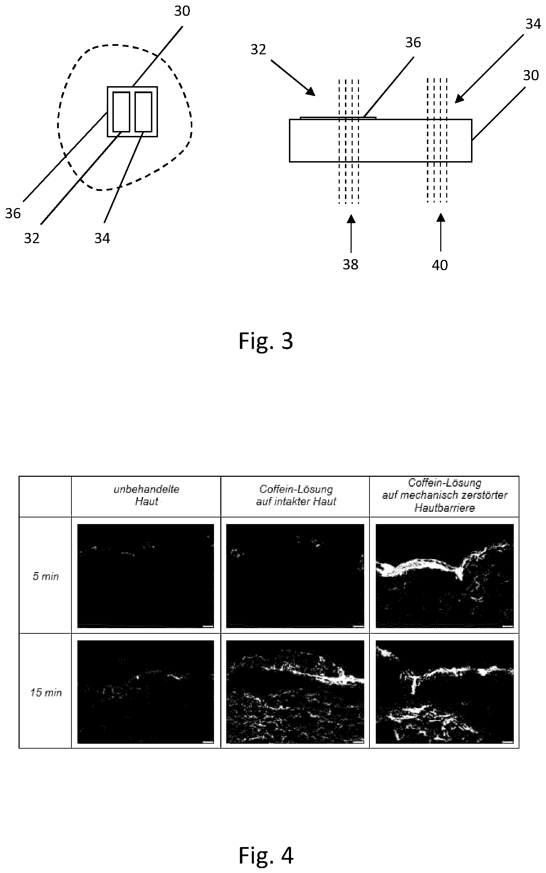

In Figur 3 ist schematisch die vorgeschlagene Herangehensweise bei der Erzeugung der Gewebeprobe dargestellt.

Auf der linken Seite in Figur 3 ist in einer Draufsicht dargestellt, dass eine Gewebeprobe 30 entnommen wird, beispielsweise durch Ausstanzen aus einer Hautpartie oder einer anderen Barriere des Körpers (Darmoberfläche etc.). Auf diese Gewebeprobe 30 wird in einem behandelten Abschnitt 32 eine Formulierung der nicht- oder schwachfluoreszierenden Substanz aufgetragen. In einem unbehandelten Abschnitt 34 der Gewebeprobe wird die Formulierung nicht aufgetragen. Insbesondere hat es sich dabei als vorteilhaft herausgestellt, wenn die ausgestanzte Gewebeprobe 30 direkt nach der Entnahme eingefroren wird. Dabei ist es optional möglich und vorteilhaft, die Probe mittels eines Mediums (Tissuetec) vor "Gefrierbrand" zu schützen.

Auf der rechten Seite in Figur 3 ist eine vergrößerte Seiten- bzw. Schnittansicht auf die Gewebeprobe 30 dargestellt. In dem behandelten Abschnitt 32 wurde die nicht- oder schwachfluoreszierende Substanz 36 aufgetragen. In dem unbehandelten Abschnitt 34 wurde die Substanz nicht aufgetragen. Es werden nun Gewebeschnitte der Gewebeprobe 30 erzeugt. Wie durch die gestrichelten Linien angedeutet, werden die Gewebeschnitte in den beiden Abschnitten 32, 34 erzeugt. Im dargestellten Ausführungsbeispiel werden vertikale Gewebeschnitte erzeugt, also Gewebeschnitte, die senkrecht zur Oberfläche der Gewebeprobe orientiert sind. Die Gewebeschnitte können insbesondere mittels eines entsprechenden Mikrotoms erzeugt werden. Wie dargestellt werden üblicherweise jeweils mehrere Gewebeschnitte in den beiden Abschnitten 32, 34 erzeugt. Ein erster Gewebeschnitt 38 innerhalb des behandelten Abschnitts 32 sowie ein zweiter Gewebeschnitt 40 innerhalb des unbehandelten Abschnitts 34 ist dabei jeweils vorzugsweise zwischen 15 µm und 50 µm dick. Insbesondere hat es sich als vorteilhaft herausgestellt, dass eine Dicke zwischen 20 µm und 50 µm verwendet wird. Durch die Verwendung zweier Gewebeschnitte aus derselben Gewebeprobe 30 wird sichergestellt, dass Effekte wie ein Hormongehalt oder ein Hormonspiegel in der Gewebeprobe, ein Alter der Gewebeprobe, ein Adrenalinspiegel in der Gewebeprobe, ein Wasser- und/oder Fettgehalt sowie eine Zusammensetzung in beiden Gewebeschnitten 38, 40 gleich sind. Die durch diese Effekte erzeugten Auswirkungen können insoweit verbessert kompensiert werden, wenn insbesondere ein Unterschied zwischen den beiden erzeugten Lichtmikroskopbildern betrachtet wird.

Durch den erfindungsgemäßen Ansatz kann eine schnelle und aussagekräftige Einschätzung erfolgen, wie schnell und wie tief chemische Substanzen in eine Gewebeprobe eindringen. Insbesondere wird es möglich, die Haut, die Darmoberfläche, die Lunge oder auch das Auge eines Lebewesens zu untersuchen. Unter geringem analytischen Aufwand kann ein orts- und zeitaufgelöstes Penetrationsprofil von chemischen Substanzen ermittelt werden. Insoweit können so kostengünstig geeignete Formulierungsstrategien von weniger geeigneten oder ungeeigneten Formulierungsstrategien unterschieden werden. Der erfindungsgemäße Ansatz stellt insoweit ein optimales Screening-Werkzeug für die Entwicklung effektiver Produkte, insbesondere topischer Produkte, mit definiertem Wirk- und Penetrationsprofil dar. Ebenfalls eignet sich der Ansatz zur Abschätzung der Penetration von Chemikalien. Zudem kann der Ansatz zur Testung der Bioverfügbarkeit nach Gewebeexposition, insbesondere dermaler Exposition, und für eine Toxizitätsbewertung herangezogen werden. Es ist denkbar, dass die Penetration nicht nur an frischer Haut und anderen frischen Gewebeproben, sondern auch an Gewebemodellen bzw. Hautmodellen (artifizieller Haut, veganer Haut, künstlichen Membranen, Zellkulturmodellen etc.) angewendet wird.

Anhand der Figuren 4, 5 und 6 wird ein erstes Ausführungsbeispiel der Erfindung erläutert. Koffein ist eine gut penetrierende Substanz und dient daher als Referenzsubstanz gemäß der OECD-Guideline zur Testung der dermalen Penetration von chemischen Substanzen (OECD Environment, Health and Safety Publications, Series on Testing and Assessment, No. 156, GUIDANCE NOTES ON DERMAL ABSORPTION, 2019). Eine einprozentige wässrige Koffeinlösung wurde auf Schweinehaut aufgetragen - einmal auf intakte Haut und einmal auf Haut mit gestörter Barrierefunktion nach mechanischer Belastung. Die Inkubationszeit war fünf bzw. fünfzehn Minuten. Nach Inkubation der Haut wurden Hautbiopsien gewonnen und eingefroren. Mittels eines Mikrotoms wurden 20 µm dicke vertikale Hautschnitte angefertigt, von denen mit einem Fluoreszenzmikroskop Lichtmikroskopbilder aufgenommen wurden. Pro Probe wurden über 60 Bilder von verschiedenen Hautarealen aufgenommen.

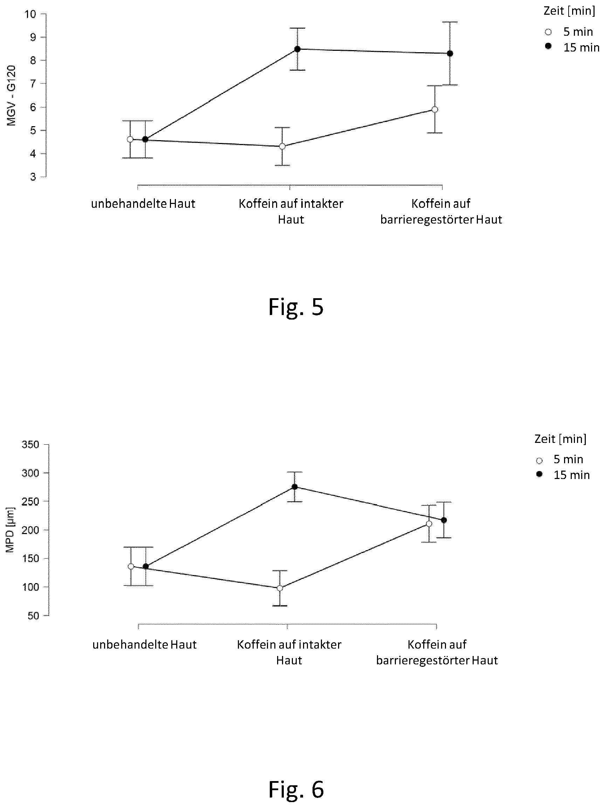

Die Bilder wurden dann mit dem erfindungsgemäßen Ansatz analysiert. Zunächst erfolgte eine Sektion der Bilder nach dem RGB-Farbschema. Um die Autofluoreszenz der Haut bestmöglich aus den Bildern zu eliminieren, wurden Bilder der unbehandelten Haut digital einem RGB-Split unterzogen. Als Schwellenwert wurde der Wert festgelegt, der sämtliche Intensitäten aus dem Bild entfernt (Festlegung des Hintergrunds bzw. Ermittlung des Hintergrundwerts). Der hier gefundene bzw. verwendete Algorithmus zur Entfernung der Autofluoreszenz der Haut war ein Filteralgorithmus, der nur die Grünanteile mit einem Grauwert größer 120 als Vordergrundpixel definiert. Alle anderen Farbanteile wurden von den weiteren erzeugten Lichtmikroskopbildern entfernt. Die in dieser Weise erhaltenen Bilder (Penetrationsbilder) zeigen im Gegensatz zu den Originalbildern eindeutige Unterschiede zwischen den mit Koffein behandelten und den unbehandelten Hautproben (Figur 4). Die verbleibenden Farbanteile entsprechen somit dem penetrierten Koffein und die penetrierte Menge kann durch das Messen der Grauwertintensität oder auch als Anteil des damit ausgefüllten Areals ermittelt werden (vgl. Figur 5). Zudem kann auch eine Penetrationstiefe gemessen werden, wodurch eine ortsaufgelöste Penetrationsanalyse ermöglicht wird (vgl. Figur 6).

In Figur 4 sind dabei Hautsektionen von unbehandelter Schweinehaut (linke Spalte), mit einprozentiger wässriger Koffeinlösung behandelter intakter Schweinehaut (Mitte) und mit einprozentiger wässriger Koffeinlösung behandelter Schweinehaut mit mechanisch zerstörter Hautbarriere (rechte Spalte) dargestellt. Insbesondere zeigen die dargestellten Bilder die erzeugten Penetrationsbilder nach Ermitteln des Hintergrundwerts und Subtraktion des Hintergrunds.

In Figur 5 ist ein mittlerer Grauwert (mean grey value, MGV) zur semi-quantitativen Bestimmung der penetrierten Wirkstoffmenge dargestellt. In Figur 6 ist eine mittlere Penetrationstiefe (mean penetration depth, MPD) zur Bestimmung der Penetrationstiefe dargestellt. Die Daten zeigen, dass Koffein aus wässriger Lösung nach fünf Minuten noch nicht in die Haut penetriert ist, wenn die Lösung auf intakte Haut aufgetragen wurde. Wird die Lösung auf barrieregestörte Haut (geschädigte Hautbarriere) aufgetragen, penetriert Koffein sofort. Nach fünfzehn Minuten gibt es keine Unterschiede hinsichtlich der penetrierten Wirkstoffmenge zwischen intakter und barrieregestörter Haut. Die Penetrationstiefe ist jedoch bei intakter Haut tiefer als nach dem Auftragen auf barrieregestörter Haut. Hier nimmt die Penetrationstiefe nicht mehr zu. Die beschriebenen Unterschiede sind signifikant (einfaktorielle ANOVA mit Games-Howell-korrigierter post-hoc Analyse).

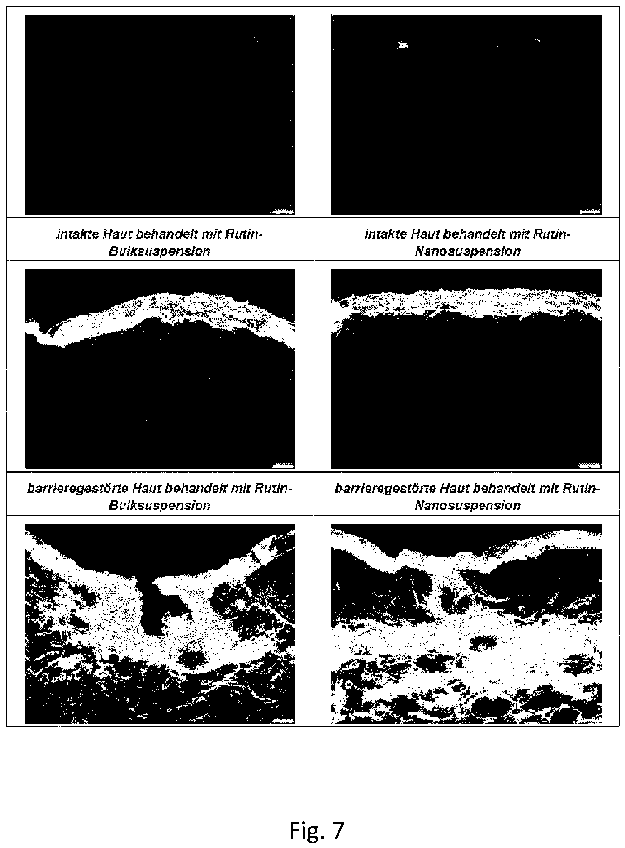

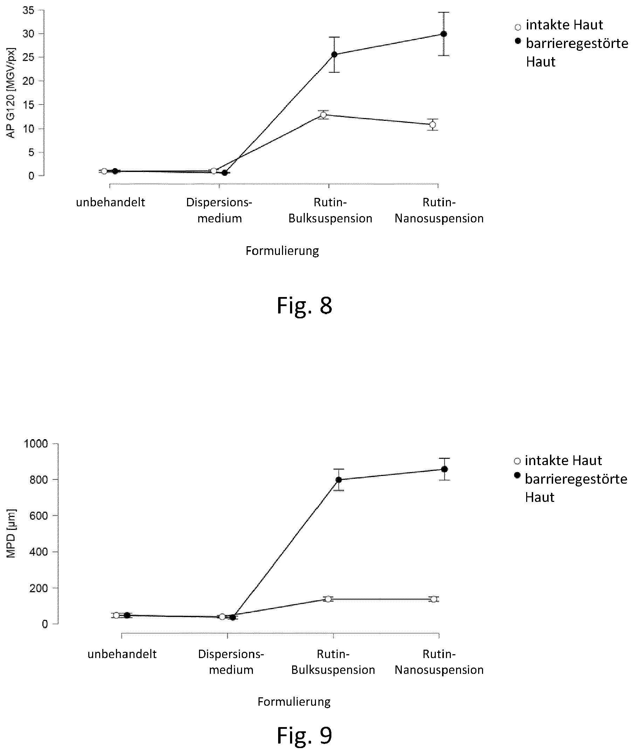

In Figuren 7, 8 und 9 ist ein zweites Ausführungsbeispiel dargestellt. Rutin ist ein Flavonoid. Es wurde in verschiedenen Vehikeln formuliert und mithilfe unterschiedlicher Verfahren auf die Haut appliziert. Die Penetrationszeit war vier Stunden. Die Verfahrensweise erfolgte dann wie zuvor beschrieben. Im vorliegenden Fall wurde der Hintergrundwert zum Ermitteln des Penetrationsbildes basierend auf einer Definition der Vordergrundpixel als Pixel mit einem Grünanteil mit einem Grauwert größer 100 definiert. Alle anderen Farbanteile wurden von den Lichtmikroskopbildern gleichermaßen entfernt für die Erzeugung des Penetrationsbildes. Auch die in diesem Ausführungsbeispiel erhaltenen Penetrationsbilder zeigen eindeutige Unterschiede zwischen den mit Rutin behandelten und den unbehandelten Abschnitten sowie zwischen den Hautsektionen mit unterschiedlichen Rutinformulierungen bzw. Behandlungsprinzipien (vgl. Figur 7). Zusätzlich wurde wieder die Menge an penetriertem Wirkstoff quantifiziert (AP) und die Penetrationstiefe (MPD) gemessen, wodurch eine ortsaufgelöste Penetrationsanalyse ermöglicht wurde (vgl. Figuren 8 und 9).

In Figur 7 sind dabei verschiedene Penetrationsbilder dargestellt, die mittels der beschriebenen Bildanalyse erzeugt wurden. Gezeigt sind jeweils Hautsektionen von Schweinehaut. Oben sind unbehandelte (links) und mit wirkstoffreinem Dispersionsmedium behandelte (rechts) Proben dargestellt. In der Mitte sind mit fünfprozentigen Rutinsuspensionen behandelte Proben von intakter Haut dargestellt (Bulkmaterial auf der linken Seite im Vergleich zu Nanosuspension auf der rechten Seite). Unten sind mit fünfprozentigen Rutinsuspensionen behandelte Proben von barrieregestörter Haut dargestellt (Bulkmaterial auf der linken Seite im Vergleich zu Nanosuspension auf der rechten Seite). In der Darstellung ist jeweils eine 200-fache Vergrößerung gewählt, so dass die Skalierung 50 µm entspricht.

In Figur 8 ist eine Auswertung zur Observation der dermalen Penetration dargestellt. Gezeigt ist die penetrierte Wirkstoffmenge (amount penetrated, AP) zur semi-quantitativen Bestimmung der Penetration.

In Figur 9 ist die mittlere Penetrationstiefe (mean penetration depth, MPD) zur Bestimmung der Penetrationstiefe dargestellt. Die Daten zeigen, dass Rutin aus nanoskaliger Formulierung nicht besser als Bulkmaterial in die Haut penetriert, jedoch geringfügig besser, wenn diese Formulierung auf barrieregestörte Haut aufgetragen wird. Die beschriebenen Unterschiede sind signifikant (einfaktorielle ANOVA mit Games-Howell-korrigierter post-hoc Analyse).

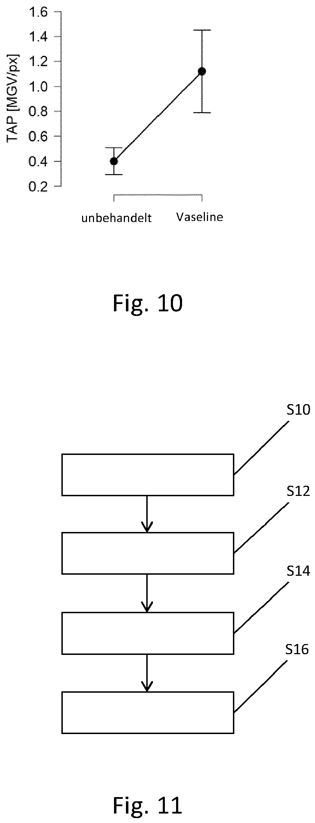

In Figur 10 ist schematisch ein drittes Ausführungsbeispiel dargestellt. Vaseline ist ein wichtiger Hilfsstoff, welcher aus einem Gemisch aus festen und flüssigen Kohlenwasserstoffen besteht und häufig in der Pharmazie und in der Kosmetik eingesetzt wird. Bisher ist es mit einfachen mikroskopischen Methoden nicht möglich nachzuweisen, ob die Vaseline oder Teile der Vaseline nach dermaler Applikation in die Haut penetrieren. Dargestellt ist eine Auswertung zur Observation der dermalen Penetration (total amount penetrated, TAP) von Vaseline nach dem Auftragen auf hydratisierte Haut im Vergleich zu unbehandelter Haut.

Vaseline wurde auf die Haut appliziert. Die Penetrationszeit war vier Stunden. Die Verfahrensweise erfolgte dann wie oben beschrieben. Das eingesetzte Verfahren zur Subtraktion der Hautautofluoreszenz basierte darauf, dass Rotanteile mit einem Grauwert größer 33, Grünanteile mit einem Grauwert größer 6 und Blauanteile mit einem Grauwert größer 15 als Vordergrundpixel definiert wurden. Alle anderen Farbanteile wurden mittels automatischer Subtraktion von den Lichtmikroskopbildern gleichermaßen entfernt. Auch die in dieser Weise erzeugten Penetrationsbilder zeigen signifikante Unterschiede zwischen den mit Vaseline behandelten und den unbehandelten Hautproben (vgl. Abbildung 10, Mann-Whitney-Test).

Neben den oben dargestellten Ausführungsbeispielen wurden auch weitere pharmazeutische und kosmetische Wirk- und Hilfsstoffe getestet. Insbesondere wurden Versuche vorgenommen mit Ascorbinsäure, Ascorbylpalmitat, Finasterid, Hydrocortison, Hydrocortisonacetat, Ibuprofen, mittelkettigen Triglyceriden, Phospholipiden, Povidon-lod, Ubichinon (Q₁₀) und Wasser. Es wurden signifikante Unterschiede zwischen unbehandelter und behandelter Haut ermittelt.

In Figur 11 ist schematisch ein erfindungsgemäßes Verfahren zum Quantifizieren einer Penetration einer nicht- oder schwachfluoreszierenden Substanz in eine Gewebeprobe dargestellt. Das Verfahren umfasst Schritte des Empfangens S10 eines ersten Lichtmikroskopbildes und eines zweiten Lichtmikroskopbildes, des Ermittelns S12 eines Hintergrundwerts, des Ermittelns S14 eines Penetrationsbildes und des Ermittelns S16 eines Penetrationswerts. Das Verfahren kann insbesondere in Software ausgebildet sein, wobei die Software beispielsweise auf einem Prozessor einer Kamera oder auch auf einem Prozessor eines anderen Computers ausgeführt werden kann.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

## Patentansprüche

1. Vorrichtung (14) zum Quantifizieren einer Penetration einer nicht- oder schwachfluoreszierenden Substanz (36) in eine Gewebeprobe (30), mit:
einer Eingangsschnittstelle (22) zum Empfangen eines ersten Lichtmikroskopbildes eines ersten Gewebeschnitts (38) eines mit einer Formulierung der nicht- oder schwachfluoreszierenden Substanz behandelten Abschnitts (32) der Gewebeprobe und eines zweiten Lichtmikroskopbildes eines zweiten Gewebeschnitts (40) eines unbehandelten Abschnitts (34) der Gewebeprobe;
einer Hintergrundeinheit (24) zum Ermitteln eines Hintergrundwerts basierend auf dem zweiten Lichtmikroskopbild;
einer Subtraktionseinheit (26) zum Ermitteln eines Penetrationsbildes basierend auf dem ersten Lichtmikroskopbild und dem Hintergrundwert; und
einer Auswerteeinheit (28) zum Ermitteln eines Penetrationswerts basierend auf dem Penetrationsbild.

2. Vorrichtung (14) nach Anspruch 1, wobei die Eingangsschnittstelle (22) zum Empfangen von unter breitbandiger Beleuchtung aufgenommenen Lichtmikroskopbildern ausgebildet ist, bevorzugt unter Beleuchtung über einen Wellenlängenbereich mit einem Umfang >200 nm, sehr bevorzugt >300 nm, insbesondere >400 nm.

3. Vorrichtung (14) nach einem der vorstehenden Ansprüche, wobei die Eingangsschnittstelle (22) zum Empfangen von unter Anwendung eines Polarisationsfilters aufgenommenen Lichtmikroskopbildern ausgebildet ist.

4. Vorrichtung (14) nach einem der vorstehenden Ansprüche, wobei
die Hintergrundeinheit (24) zum Ermitteln eines Intensitätsschwellenwerts für Intensitätswerte von Pixeln des zweiten Lichtmikroskopbildes als Hintergrundwert ausgebildet ist; und
die Hintergrundeinheit vorzugsweise zum Ermitteln eines Intensitätsschwellenwerts ausgebildet ist, durch dessen Anwendung auf die Pixel des zweiten Lichtmikroskopbildes ein Bereich einer Oberfläche der Gewebeprobe (30) eine minimale Sichtbarkeit aufweist.

5. Vorrichtung (14) nach Anspruch 4, wobei die Subtraktionseinheit (26) zum Ermitteln des Penetrationsbildes basierend auf einer Anwendung des Intensitätsschwellenwerts auf Intensitätswerte von Pixeln des ersten Lichtmikroskopbildes ausgebildet ist.

6. Vorrichtung (14) nach einem der vorstehenden Ansprüche, wobei die Auswerteeinheit (28) zum Ermitteln des Penetrationswerts basierend auf Intensitätswerten von Pixeln des Penetrationsbildes ausgebildet ist, vorzugsweise basierend auf einer Mittelwertbildung der Intensitätswerte aller Pixel des Penetrationsbildes.

7. Vorrichtung (14) nach einem der vorstehenden Ansprüche, wobei die Auswerteeinheit (28) zum Ermitteln des Penetrationswerts basierend auf einer Erkennung einer Gewebeoberfläche in dem ersten Lichtmikroskopbild und einer Ermittlung einer Distanz zwischen der Gewebeoberfläche und einem in dem Penetrationsbild identifizierten Bildbereich einer maximalen Eindringtiefe der Substanz (36) in die Gewebeprobe (30) ausgebildet ist.

8. Vorrichtung (14) nach einem der vorstehenden Ansprüche, wobei
die Eingangsschnittstelle (22) zum Empfangen von farbigen Lichtmikroskopbildern ausgebildet ist; und
die Subtraktionseinheit (26) zum Ermitteln des Penetrationsbildes basierend auf einer Unterdrückung mindestens eines Farbkanals in dem zweiten Lichtmikroskopbild ausgebildet ist.

9. Vorrichtung (14) nach einem der vorstehenden Ansprüche, wobei die Eingangsschnittstelle (22) zum Empfangen von Lichtmikroskopbildern von senkrecht zu einer Oberfläche der Gewebeprobe (30) verlaufenden vertikalen Gewebeschnitten ausgebildet ist.

10. Vorrichtung (14) nach einem der vorstehenden Ansprüche, wobei die Eingangsschnittstelle (22) zum Empfangen von auf einem Objektträger (20) des Lichtmikroskops befindlichen Gewebeschnitten mit einer Dicke zwischen 15 µm und 50 µm, insbesondere einer Dicke zwischen 20 µm und 40 µm, ausgebildet ist.

11. Vorrichtung (14) nach einem der vorstehenden Ansprüche, wobei die Eingangsschnittstelle (22) zum Empfangen der Lichtmikroskopbilder von einer Kamera (16) eines Lichtmikroskops (12) ausgebildet ist, insbesondere einer Graustufenkamera.

12. Vorrichtung (14) nach einem der vorstehenden Ansprüche, wobei die Eingangsschnittstelle (22) zum Empfangen der Lichtmikroskopbilder
von einem Auflichtmikroskop ausgebildet ist; und/oder
von einem Fluoreszenzmikroskop, insbesondere einem Epifluoreszenzmikroskop, ausgebildet ist.

13. System (10) zum Ermitteln einer Penetration einer nicht- oder schwachfluoreszierenden Substanz (36) in eine Gewebeprobe (30), mit:
einer Vorrichtung (14) nach einem der vorstehenden Ansprüche; und
einem Lichtmikroskop (12) mit einer Kamera zum Erzeugen von Lichtmikroskopbildern.

14. Verfahren zum Quantifizieren einer Penetration einer nicht- oder schwachfluoreszierenden Substanz (36) in eine Gewebeprobe (30), mit den Schritten:
Empfangen (S10) eines ersten Lichtmikroskopbildes eines ersten Gewebeschnitts (38) eines mit einer Formulierung der nicht- oder schwachfluoreszierenden Substanz behandelten Abschnitts (32) der Gewebeprobe und eines zweiten Lichtmikroskopbildes eines zweiten Gewebeschnitts (40) eines unbehandelten Abschnitts (34) der Gewebeprobe;
Ermitteln (S12) eines Hintergrundwerts basierend auf dem zweiten Lichtmikroskopbild;
Ermitteln (S14) eines Penetrationsbildes basierend auf dem ersten Lichtmikroskopbild und dem Hintergrundwert; und
Ermitteln (S16) eines Penetrationswerts basierend auf dem Penetrationsbild.

15. Computerprogrammprodukt mit Programmcode zum Durchführen der Schritte des Verfahrens nach Anspruch 14, wenn der Programmcode auf einem Computer ausgeführt wird.
